# FASCICULE DE BREVET EUROPEEN

(11) **EP 1 873 483 B1**
(45) Date de publication et mention de la délivrance du brevet: **10.08.2016**
(21) Numéro de dépôt: 07356089.8
(22) Date de dépôt: 28.06.2007
(51) Int. Cl.: G01B 11/24, G06T 7/00, G06T 7/60

(54) **Procédé de détermination d'au moins une caractéristique du format d'un fragment de pneumatique, et procédé d'examen d'un échantillon de fragments de pneumatiques**
Verfahren zur Bestimmung mindestens eines Formatmerkmals eines Reifenfragments und Prüfverfahren für eine Probe von Reifenfragmenten
Method of determining at least one characteristic of the format of a tyre fragment and method of examining a sample of tyre fragments

(30) Priorité: 29.06.2006 FR 0605880
(43) Date de publication de la demande: 02.01.2008
(73) Titulaire: Aliapur, 69003 Lyon (FR)
(72) Inventeur: Clauzade, Catherine, 69003 Lyon (FR); de Cazenove, Arthur, 69003 Lyon (FR)
(74) Mandataire: Myon, Gérard Jean-Pierre

(56) Documents cités:
- EP-A- 1 273 901
- CA-A1- 2 416 966
- US-A- 4 648 053

## Description

La présente invention concerne un procédé de détermination d'au moins une caractéristique du format de fragments de pneumatiques.

Aux termes du décret n° 2002-1563 du 24 décembre 2002 relatif à l'élimination des pneumatiques usagés, les producteurs, définis comme « *les personnes qui fabriquent, importent ou introduisent en France des pneumatiques, mettent sur le marché des pneumatiques à leur marque, importent ou introduisent des engins équipés de pneumatiques* », sont « *tenus de collecter ou faire collecter, chaque année, à leurs frais, dans la limite des tonnages qu'ils ont eux-mêmes mis sur le marché national l'année précédente, les pneumatiques usagés que les distributeurs ou détenteurs tiennent à leur disposition ».*

Ce décret précise par ailleurs que « *ces producteurs sont en outre tenus de valoriser ou détruire les pneumatiques usagés ainsi collectés ou ceux utilisés pour leur propre compte* ». Dans ces conditions, les pneumatiques usagés sont généralement soumis à une étape initiale de réduction de leur taille, opérée notamment par broyage. Ceci conduis à l'obtention de fragments de ces pneumatiques, qui sont ensuite utilisés dans différents types d'industries.

Confrontée à un nouveau contexte réglementaire et à des enjeux de développement durable (tel par exemple celui de l'élimination du risque environnemental liés aux produits en fin de vie), cette filière doit pour se développer harmoniser et codifier ses activités et la terminologie associée ainsi que définir ses règles de bonnes pratiques afin de tendre vers un niveau optimal :
- dans la qualité et l'homogénéité des produits délivrés aux utilisateurs finaux,
- dans la qualité des prestations de services rendues lors de la collecte, du tri et de la préparation des pneus usagés non réutilisables en vue de leur valorisation,
- dans la sécurité et la fiabilité des technologies de production utilisées.

Dans ce contexte, il est nécessaire de pouvoir caractériser les « produits » obtenus à différentes étapes de traitement, notamment à l'issue de la première étape de fragmentation des pneumatiques usagés.

Par conséquent, l'invention concerne la détermination d'au moins une caractéristique du format des fragments de pneumatiques ainsi obtenus. Au sens de l'invention, le format de ces fragments est défini par un ensemble de caractéristiques, notamment statistiques, relatives à la forme et à la morphologie de ces fragments. De manière générale, ces derniers comportent une partie centrale, constituée principalement de caoutchoucs, ainsi que des parties périphériques filiformes, composées principalement de métal ou de fibres textiles, ce qui confère à ces fragments une forme complexe bidimensionnelle.

La détermination d'au moins une caractéristique du format de ces fragments est importante, aussi bien pour la valorisation énergétique comme combustible que pour la valorisation matière comme matériau, pour la valorisation en génie civil ou encore pour d'autres étapes de traitement.

Les méthodes classiques de caractérisation dimensionnelles ne sont pas applicables aux fragments de pneumatiques étant donné que, comme on l'a vu ci-dessus, ces derniers présentent des formes complexes bidimensionnelles. De plus ces fragments sont de dimensions importantes, le plus souvent supérieures à 20 mm.

Au total les méthodes granulométriques classiques par tamisage ou plus récentes par analyse d'image, telle que décrite dans la norme française X11-696 « granulométrie par analyse d'image » ne sont pas applicables ni appliquées à ce type de produits. Cette norme française X11-696 « granulométrie par analyse d'image » applique les techniques d'analyse d'image en microscopie optique pour des particules très fines en comparaison avec les fragments de pneumatiques.

Une norme expérimentale française XP T47-751 permet une détermination du format des produits issus du broyage primaire de pneumatiques, par une mesure manuelle basée sur la plus grande longueur projetée. Cette méthode a l'avantage d'être simple à mettre en oeuvre. Elle se révèle cependant peu satisfaisante, notamment en ce qu'elle ne permet pas d'obtenir des informations suffisamment significatives du format des fragments de pneumatiques.

Enfin, EP-A-1 273 901 décrit toutes les caractéristiques du préambule de la revendication 1 annexée.

Ceci étant précisé, l'invention vise à améliorer la norme XP T47-751 présentée immédiatement ci-dessus. Elle vise en particulier à proposer un procédé permettant de déterminer, de façon simple et fiable, des caractéristiques du format de fragments de pneumatiques qui sont suffisamment pertinentes, en vue du traitement postérieur de ces fragments.

A cet effet, elle a pour objet un procédé de détermination selon la revendication 1 annexée.

Des caractéristiques avantageuses de l'invention font l'objet des revendications 2 à 8.

L'invention a également pour objet un procédé d'examen d'un échantillon de fragments de pneumatiques conforme à la revendication 9 annexée.

L'invention va être décrite ci-après, en référence aux dessins annexés, donnés uniquement à titre d'exemples non limitatifs, dans lesquels :
- la figure 1 représente, vue de dessus, un fragment de pneumatique que se propose de traiter l'invention ;
- la figure 2 est une image, correspondant à la vue de dessus de la figure 1, illustrant ce fragment de pneumatique auquel est associé son contour convexe obtenu conformément à l'invention ; et
- la figure 3 est une vue de dessus, analogue à la figure 1, illustrant un autre type de fragment de pneumatique susceptible d'être traité conformément à l'invention.

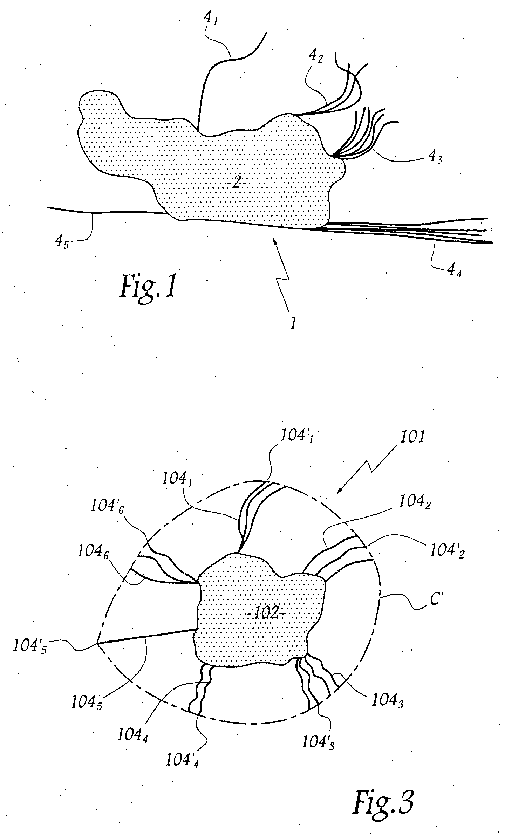

Le fragment de pneumatique illustré sur la figure 1 a été obtenu, de manière classique, à partir d'un pneumatique usagé, qui a par exemple été broyé. Ce fragment comporte une partie centrale, ou corps 2, qui est composé principalement de caoutchoucs, ainsi que différentes excroissances filiformes, composées principalement de métal ou de fibres textiles.

Ces excroissances, encore dénommées « barbules », présentent des formes et des dimensions très diverses. Sur la figure 1, elles sont affectées des références 4₁ à 4₅. Conformément à l'invention, les irrégularités du pourtour du corps 2 ne sont cependant pas assimilées aux barbules précitées. A cet effet, ces barbules sont définies comme étant des excroissances présentant une longueur minimale, par exemple de quelques millimètres.

Le but de l'invention est d'accéder à la connaissance du format de fragments de pneumatiques, tel que celui de la figure 1, notamment afin de s'assurer que ce format est adapté aux opérations postérieures que ce fragment est susceptible de subir. A cet effet, conformément à l'invention, il s'agit de caractériser le format de ce fragment de pneumatique, par une analyse d'images réalisée au moyen d'un appareillage non représenté.

Cet appareillage, qui est de type classique, comporte par exemple un appareil photographique ou une caméra numérique de résolution standard. Des résultats satisfaisants ont été obtenus en utilisant une tente à lumière et deux tubes fluorescents placés à l'extérieur, permettant d'obtenir un environnement lumineux assez fiable pour les différentes images. L'appareil photographique ou la caméra numérique est alors fixé(e) sur le haut de la tente, à distance constante.

Le système d'acquisition des informations est calibré avant essai. Le calibrage des couleurs de l'image est réalisé avec le réglage automatique de la balance des blancs, alors que le calibrage spatial est réalisé par un logiciel de traitement d'images à partir de l'acquisition d'une mire de calibrage, de dimensions connues. En termes d'environnement informatique, des résultats satisfaisants ont été obtenus avec un PC portable ayant un processeur Pentium 4 à 3 gigahertz, ainsi qu'un disque dur de 60 gigas fonctionnant sous Windows XP.

Le fragment 1 est alors disposé à plat sur un fond clair, en vue de son examen. Le corps central 2 présente un contraste important par rapport à ce fond clair, de sorte qu'il est commode d'en identifier le périmètre, noté P, qui définit l'image de ce corps 2.

La connaissance de ce périmètre permet d'accéder à diverses caractéristiques géométriques, relatives au corps central 2. Il s'agit par ailleurs de la plus grande longueur projetée, notée I, qui est déterminée manuellement dans la norme française XP T47-751, alors qu'elle est déterminée automatiquement dans le cadre de la présente invention. Il est également possible d'accéders à l'aire de ce corps 2, notée s. La détermination de ces caractéristiques est réalisée après un traitement de l'image, suivant des techniques connues, visant à affiner le pourtour du corps 2, notamment grâce à des étapes morphologiques de dilatation-érosion après numérisation et seuillage.

Conformément à l'invention, on délimite en outre un contour convexe, noté C, enveloppant l'ensemble du fragment de pneumatique 1, à savoir les différentes barbules 4₁ à 4₅, ainsi qu'éventuellement le corps 2. Ce contour convexe est obtenu, de manière connue en soi, en tirant parti de l'algorithme de JARVIS.

Selon la définition de cet algorithme, le contour convexe d'un ensemble de points est le plus petit ensemble convexe contenant ces points. Pour le construire, il s'agit de trouver tout d'abord un premier point faisant partie de ce contour convexe, à savoir un point d'ordonnée minimale noté P0. Le point suivant P1 est obtenu en recherchant, parmi les autres points de l'ensemble, le point réalisant l'angle polaire minimal par rapport à P0. Ce calcul fait ensuite l'objet d'une itération à partir de P1, pour trouver P2, puis P3 et ainsi de suite, jusqu'à retrouver P0.

Dans l'exemple illustré, le contour convexe C passe par les différentes extrémités 4'₁ à 4'₅ des barbules 4₁ à 4₅, ainsi que par certains des sommets, notés 2'₁ à 2'₃, appartenant au corps 2.

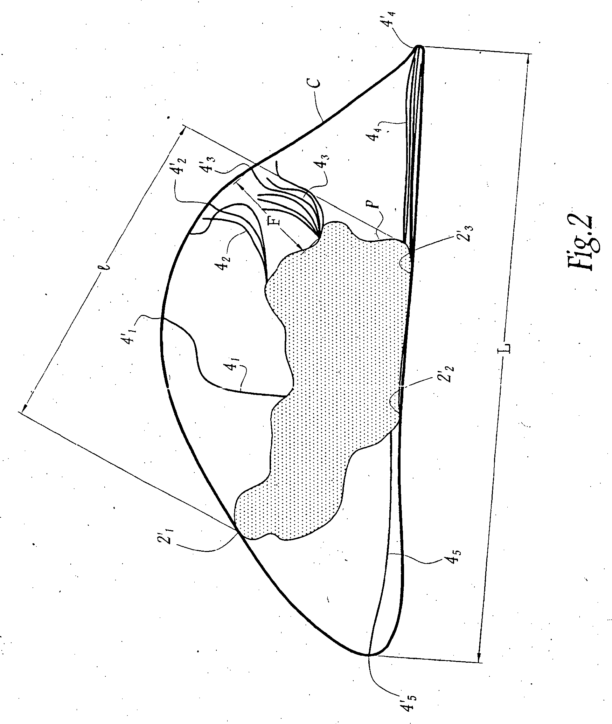

L'image du contour convexe C, obtenu conformément aux étapes décrites ci-dessus, permet d'accéder à différentes caractéristiques géométriques. Ainsi, en référence à la figure 2, on note L la plus grande longueur projetée de l'image de ce contour convexe, alors que l'aire de cette image est notée S.

D'autres caractéristiques géométriques de ce contour convexe C peuvent également être identifiées, telles la largeur qui est définie comme la dimension projetée selon une direction perpendiculaire à celle de la plus grande longueur projetée. On peut également identifier la compacité et la circularité de ce contour, par traitement statistique de type connu en soi.

La connaissance de ces différentes caractéristiques géométriques, en particulier celles liées au contour convexe C, est d'un intérêt notable en termes industriels.

Ainsi, la valeur de la plus grande longueur projetée L de ce contour convexe C permet d'évaluer d'éventuels risques d'obstruction d'un dispositif d'injection de ces fragments dans un foyer de combustion, ou dans un broyeur secondaire.

De plus, la valeur du ratio S/s entre les aires respectives du contour convexe et du corps 2, est significative globalement du nombre et de la dimension des barbules présentes sur un fragment de pneumatique considéré.

Ainsi, une forte présence de ces barbules est susceptible de conduire à la formation d'agglomérats de fragments, qui modifie alors les propriétés de l'ensemble de ces fragments agglomérés. On notera par exemple que ce phénomène implique un risque indirect d'obstruction d'un dispositif d'injection de ces fragments, ou bien modifie la densité en couches géotechniques, ou encore induit des risques de poinçonnement de membranes imperméables.

En outre, il est possible de déduire d'autres paramètres géométriques revêtant une importance significative, tels que le ratio L/I. On notera également que la détermination de !a distance (flèche F sur la figure 2) entre le corps 2 et le contour C, permet d'accéder à la longueur des barbules, en l'occurrence de celle référencée 4₃.

La figure 3 illustre un fragment de pneumatique 101, susceptible d'être traité conformément à l'invention, qui diffère cependant de celui 1 décrit ci-dessus. En effet, ce fragment 101 présente un contour convexe C' qui relie les différentes extrémités 104'₁ à 104'₆ des barbules 104₁ à 104₆, s'étendant à partir du corps 102. En d'autres termes, l'agencement et les dimensions de ces barbules sont tels, que le contour convexe C' ne passe pas par un sommet du corps 102 du fragment 101.

L'invention permet d'atteindre les objectifs précédemment mentionnés. En effet, il est du mérite de la Demanderesse d'avoir mis en exergue les limites de la norme expérimentale française XP T47-751. En effet, étant donné que celle-ci est limitée à la détermination de la plus grande longueur projetée du corps central, elle ne permet pas de fournir d'informations précises sur le format de ce fragment, prenant notamment en compte les barbules.

Au contraire, la présente invention tire parti du contour convexe de l'ensemble du fragment de pneumatique, y compris les barbules précitées, ce qui permet d'accéder à des caractéristiques géométriques réellement représentatives de la nature de ce fragment. Comme évoqué ci-dessus, la prise en compte de ces barbules qui donnent au fragment des dimensions plus grandes que celles de là partie centrale, est particulièrement utile afin d'évaluer l'éventuel risque d'obstruction, ou de formation d'agglomérats.

Sur la base des informations obtenues grâce à l'invention, il est possible d'accéder à différents indices de qualité caractérisant le format d'un groupe de fragments à évaluer. Par exemple, la proportion de fragments dont l'image du contour convexe a une plus grande longueur projetée supérieure au diamètre d'un orifice d'injection exprime un risque direct d'obstruction de cet orifice. De même, le nombre moyen d'excroissances filiformes par fragment est un indice d'agglomération possible de ces fragments pendant les manipulations, qui implique par conséquent un risque indirect d'obstruction d'orifice d'injection, ou encore un risque de densité trop faible dans une couche géotechnique.

## Revendications

1. Procédé de détermination, par analyse d'images, d'au moins une caractéristique du format d'au moins un fragment de pneumatique (1 ; 101), chaque fragment comportant un corps central (2 ; 102) composé principalement de caoutchoucs, ainsi que différentes parties filiformes (4₁-4₅ : 104₁-104₆) s'étendant à partir dudit corps central, qui sont composées principalement de métal ou de fibres textiles, procédé **caractérisé en ce que**:
- on identifie l'image (P) du corps central (2 ; 102) ;
- on réalise un contour convexe (C ; C') de l'ensemble de chaque fragment, enveloppant les extrémités (4'₁- 4'₅ 104'₁- 104'₆) desdites parties filiformes et, éventuellement, certains sommets (2'₁-2'₃) du corps central ; et
- on détermine la ou chaque caractéristique (L, S, L/I, S/s) du format de chaque fragment à partir d'au moins l'image dudit contour convexe (C ; C').

2. Procédé de détermination selon la revendication 1, **caractérisé en ce qu'**on détermine la plus grande longueur projetée (L) de l'image du contour convexe (C ; C').

3. Procédé de détermination selon la revendication 1 ou 2, **caractérisé en ce qu'**on détermine l'aire (S) de l'image dudit contour convexe (C ; C').

4. Procédé de détermination selon l'une quelconque des revendications précédentes, **caractérisé en ce qu'**on détermine la ou chaque caractéristique à partir de l'image dudit contour convexe (C ; C'), ainsi qu'à partir de l'image (P) du corps central (2 ; 102).

5. Procédé de détermination selon les revendications 2 et 4, **caractérisé en ce qu'**on détermine le rapport entre la plus grande longueur projetée (L) de l'image du contour convexe (C ; C') et la plus grande longueur projetée (I) de l'image (P) du corps central (2 ; 102).

6. Procédé de détermination selon la revendication 4 ou 5, prise en combinaison avec la revendication 3, **caractérisé en ce qu'**on détermine le rapport entre l'aire (S) de l'image du contour convexe (C ; C') et l'aire (s) de l'image du corps central (2 ; 102).

7. Procédé de détermination selon l'une quelconque des revendications précédentes, **caractérisé en ce qu'**on place chaque fragment de pneumatique (1 ; 101) sur un fond plan clair.

8. Procédé de détermination selon l'une quelconque des revendications précédentes, **caractérisé en ce qu'**on réalise ledit contour convexe (C ; C') en utilisant l'algorithme mathématique de JARVIS.

9. Procédé d'examen d'un échantillon de fragments de pneumatiques, dans lequel on prélève ledit échantillon de fragments à partir d'un ensemble de fragments à évaluer, on détermine au moins une caractéristique du format de chaque fragment selon le procédé conforme à l'une quelconque des revendications précédentes, et on déduit un indice de qualité à partir desdites caractéristiques ainsi déterminées, cet indice de qualité étant notamment relatif à une densité de couches géotechniques et/ou à un risque direct ou indirect d'obstruction d'un orifice d'injection dans lequel lesdits fragments sont destinés à être introduits.

## Patentansprüche

1. Verfahren zur Bestimmung mindestens eines charakteristischen Merkmals des Aufbaus mindestens eines Reifenfragments (1; 101) mittels Bildanalyse, wobei jedes Fragment einen zentralen Körper (2; 102), der hauptsächlich aus Kautschuk zusammengesetzt ist, sowie unterschiedliche fadenfärmige Teile (4₁ - 4₅; 104₁ - 104₆), die sich von dem zentralen Körper erstrecken und hauptsächlich aus Metall oder Textilfasern zusammengesetzt sind, aufweist, ein Verfahren, das **dadurch gekennzeichnet ist, dass**
- das Bild (P) des zentralen Körpers (2; 102) identifiziert wird;
- eine konvexe Kontur (C; C') der Anordnung jedes Fragments realisiert wird, wobei die Enden (4'₁ - 4'₅; 104'₁ - 104'₆) der fadenförmigen Teile und gegebenenfalls bestimmte Scheitelpunkte (2'₁- 2'₃) des zentralen Körpers eingehüllt werden; und
- das oder jedes kennzeichnende Merkmal (L, S, L/I, S/s) des Aufbaus jedes Fragments aus mindestens dem Bild der konvexen Kontur (C; C') bestimmt wird.

2. Verfahren zur Bestimmung nach Anspruch 1, **dadurch gekennzeichnet, dass** die größte projizierte Länge (L) des Bildes der konvexen Kontur (C; C') bestimmt wird.

3. Verfahren zur Bestimmung nach Anspruch 1 oder 2, **dadurch gekennzeichnet, dass** der Flächeninhalt (S) des Bildes der konvexen Kontur (C; C') bestimmt wird.

4. Verfahren zur Bestimmung nach einem beliebigen der vorhergehenden Ansprüche, **dadurch gekennzeichnet, dass** das oder jedes kennzeichnende Merkmal aus dem Bild der konvexen Kontur (C; C') sowie aus dem Bild (P) des zentralen Körpers (2; 102) bestimmt wird.

5. Verfahren zur Bestimmung nach den Ansprüchen 2 und 4, **dadurch gekennzeichnet, dass** das Verhältnis zwischen der größten projizierten Länge (L) des Bildes der konvexen Kontur (C; C') und der größten projizierten Länge (I) des Bildes (P) des zentralen Körpers (2; 102) bestimmt wird.

6. Verfahren zur Bestimmung nach Anspruch 4 oder 5, zusammen mit Anspruch 3, **dadurch gekennzeichnet, dass** das Verhältnis zwischen dem Flächeninhalt (S) des Bildes der konvexen Kontur (C; C') und dem Flächeninhalt des Bildes des zentralen Körpers (2; 102) bestimmt wird.

7. Verfahren zur Bestimmung nach einem beliebigen der vorhergehenden Ansprüche, **dadurch gekennzeichnet, dass** jedes Reifenfragment (1; 101) auf einen hellen ebenen Boden gelegt wird.

8. Verfahren zur Bestimmung nach einem beliebigen der vorhergehenden Ansprüche, **dadurch gekennzeichnet, dass** die konvexe Kontur (C; C') unter Verwendung des mathematischen Algorithmus JARVIS realisiert wird.

9. Verfahren zur Untersuchung einer Probe von Reifenfragmenten, bei dem die Probe von Fragmenten aus einer Gesamtheit von zu bewertenden Fragmenten entnommen wird, mindestens ein kennzeichnendes Merkmal des Aufbau jedes Fragments nach dem Verfahren entsprechend einem beliebigen der vorhergehenden Ansprüche bestimmt wird, und ein Qualitätsindex aus den so bestimmten kennzeichnenden Merkmalen hergeleitet wird, wobei dieser Qualitätsindex sich insbesondere auf eine Dichte von geotechnischen Schichten und/oder auf eine direkte oder indirekte Gefahr des Verstopfens einer Injektionsöffnung, in die die Fragmente eingeführt werden sollen, bezogen wird.

## Claims

1. Method for determining by image analysis at least one characteristic of the format of at least one tyre fragment (1; 101), each fragment comprising a central body (2; 102) composed mainly of rubber and also different filamentous parts (4₁-4₅; 104₁-104₆) extending from said central body, which are composed mainly of metal or of textile fibres, said method **characterised in that**
• the image (P) of the central body (2; 102) is identified;
• a convex contour (C; C') of the whole of each fragment is configured, enveloping the ends (4'₁-4'₅; 104'₁-104'₆) of said filamentous parts and possibly some crests (2'₁-2'₃) of the central body; and
• the or each characteristic (L, S, L/I, S/s) of the format of each fragment is determined from at least the image of said convex contour (C; C').

2. Determination method according to claim 1, **characterised in that** the largest projected length (L) of the image of the convex contour (C; C') is determined.

3. Determination method according to claim 1 or 2, **characterised in that** the area (S) of the image of said convex contour (C; C') is determined.

4. Determination method according to one of the preceding claims, **characterised in that** the or each characteristic is determined from the image of said convex contour (C; C') and also from the image (P) of the central body (2; 102).

5. Determination method according to claims 2 and 4, **characterised in that** the relation between the largest projected length (L) of the image of the convex contour (C; C') and the largest projected length (I) of the image (P) of the central body (2; 102) is determined.

6. Determination method according to claim 4 or 5 in combination with claim 3, **characterised in that** the relation between the area (S) of the image of the convex contour (C; C') and the area (s) of the image of the central body (2; 102) is determined.

7. Determination method according to one of the preceding claims, **characterised in that** each tyre fragment (1; 101) is placed on a clear plane base.

8. Determination method according to one of the preceding claims, **characterised in that** said convex contour (C; C') is configured using Jarvis's algorithm.

9. Method of examining a sample of tyre fragments, in which said sample of fragments is taken from a set of fragments to be evaluated, at least one characteristic of the format of each fragment is determined using the method according to any one of the preceding claims, and a quality index is deduced from said characteristics thus determined, wherein this quality index relates in particular to a density of geotechnical layers and/or to a direct or indirect risk of obstruction of an injection opening, into which said fragments are intended to be introduced.
